# EUROPÄISCHE PATENTANMELDUNG

(11) **EP 1 818 166 A2**
(43) Veröffentlichungstag der Anmeldung: **15.08.2007**
(21) Anmeldenummer: 07002763.6
(22) Anmeldetag: 08.02.2007
(51) Int. Cl.: B30B 9/14, B09B 3/00, C02F 11/12, B01D 29/94

(54) **Vorrichtung zur Entwässerung von Abfällen und Beseitigung sonstiger flüssiger Anteile aus Abfällen**

(30) Priorität: 08.02.2006 DE 102006006005
(71) Anmelder: Stulz, Franz, 77971 Kippenheim (DE)
(72) Erfinder: Stulz, Franz, 77971 Kippenheim (DE)
(74) Vertreter: Lucht, Silvia

(57) **Zusammenfassung**

Es wird eine Vorrichtung zur Entwässerung von Abfällen und Beseitigung sonstiger flüssiger Anteile aus Abfällen vorgeschlagen mit einer Aufnahme zum Zuführen des Abfalls, mit einem rohrförmigen Sieb zum Trennen des flüssigen vom festen Anteil des Abfalls, mit einer drehbar gelagerten Förderschnecke in dem rohrförmigen Sieb, mit einem Antrieb für die Förderschnecke, mit einer Flüssigkeitsauffangeinrichtung unterhalb des rohrförmigen Siebs für den aus dem rohrförmigen Sieb austretenden flüssigen Anteil des Abfalls, mit einem an der in Transportrichtung der Förderschnecke vorderen Stirnseite des rohrförmigen Siebs mittelbar oder unmittelbar angeordneten Hohlkörper zum Verdichten und Weiterleiten des in der Förderschnecke entfeuchteten Abfalls, mit einer der Förderschnecke zugewandten Öffnung des Hohlkörpers, mit einer Auswurföffnung an dem dem rohrförmigen Sieb abgewandten Ende des Hohlkörpers für den entfeuchteten und verdichteten Abfall und mit einer Krümmung des Hohlkörpers zwischen der der Förderschnecke zugewandten Öffnung und der Auswurföffnung.

## Beschreibung

### Stand der Technik

Die Erfindung geht aus von einer Vorrichtung zur Entwässerung von Abfällen und zur Beseitigung sonstiger flüssiger Anteile aus Abfällen.

Derartige Vorrichtungen werden beispielsweise in gewerblichen und privaten Küchen eingesetzt. Dort fallen große Mengen an Küchen- und Speiseabfällen an. Da die Abfälle üblicherweise nur in größeren Zeitabständen abgeholt werden, müssen sie gelagert werden. Um die Fäulnisbildung während der Lagerung zu unterbinden oder zumindest zu reduzieren, werden die Abfälle in gekühlten Behältern oder Räumen aufbewahrt. Um die Lagerung und den Transport der Abfälle zu erleichtern, ist es aus dem Stand der Technik der DE 295 17 846 U1 und der DE 93 19 318 U1 bekannt, die Abfälle zu entwässern. Die bekannten Vorrichtungen haben die Nachteil, dass sie die Abfälle zwar entwässern aber die entfeuchteten Abfälle anschließend nicht oder nur unzureichend verdichten. Die Verdichtung ist bei der Lagerung und dem Transport der entfeuchteten Abfälle jedoch von entscheidender Bedeutung.

Die Aufgabe der vorliegenden Erfindung besteht darin, eine Vorrichtung zur Entwässerung von Abfällen zur Verfügung zu stellen, die den flüssigen vom festen Anteil der Abfälle trennt und anschließend die festen Anteile der Abfälle entfeuchtet. Darüber hinaus soll die Vorrichtung kostengünstig herzustellen sein und sich durch einen geringen Energieverbrauch auszeichnen.

### Die Erfindung und ihre Vorteile

Gegenüber den aus dem Stand der Technik bekannten Vorrichtungen hat die erfindungsgemäße Vorrichtung mit den Merkmalen des Anspruchs 1 den Vorteil, dass aufgrund eines Hohlkörpers, der sich in Transportrichtung an das rohrförmige Sieb anschließt, eine Verdichtung des durch die Förderschnecke entfeuchteten Abfalls erfolgt. Der Hohlkörper ist als Krümmer ausgebildet. Er weist zwischen seiner dem rohrförmigen Sieb zugewandten Öffnung und der dem rohrförmigen Sieb abgewandten Auswurföffnung eine Biegung oder Krümmung auf. Aufgrund der Krümmung wirkt dem durch die Förderschnecke transportierten entfeuchteten Abfall eine der Transportrichtung entgegengerichtete Kraft entgegen. Diese führt dazu, dass der entfeuchtete Abfall zusammengedrückt wird. Die gewünschte Verdichtung ist die Folge.

Der Abfall fällt durch eine trichterförmige Aufnahme auf eine Förderschnecke und wird durch diese transportiert. Die Förderschnecke verläuft in einem rohrförmigen Sieb, in dessen Wand mehrere Öffnungen vorgesehen sind. Beim Transportieren des Abfalls durch die Förderschnecke werden die flüssigen Anteile aus dem Abfall herausgedrückt und treten aus den Öffnungen des Siebs aus. Von dort gelangen sie in die unterhalb des Siebs vorgesehene Flüssigkeitauffangeinrichtung und werden entweder in einem Schmutzwassertank gesammelt oder über eine Schmutzwasserrinne abgeleitet. An oder nach der Flüssigkeitsauffangrichtung kann ein Öl- oder Fettabscheider vorgesehen sein. Die Flüssigkeitsauffangeinrichtung kann Teil der Vorrichtung sein oder eine separate, von der Vorrichtung getrennte Einrichtung darstellen.

Der sich an das Sieb anschließende Hohlkörper kann beispielsweise ein Rohr mit runden oder eckigem Querschnitt sein oder einen kegelförmige oder kegelstumpfförmige Gestalt aufweisen. Die Verdichtung des entfeuchteten Abfalls hängt von dem Querschnitt des Hohlkörpers ab. Je kleiner der Querschnitt ist, um so stärker ist die Verdichtung des entfeuchteten Abfalls. Der Benutzer kann zwischen verschiedenen Hohlkörpern wählen und jeweils denjenigen einbauen, der für den gewünschten Grad der Verdichtung notwendig ist. Aufgrund der Krümmung liegen die dem Sieb zugewandte Öffnung und die dem Sieb abgewandte Auswurföffnung in unterschiedlichen Ebenen.

Nach einer vorteilhaften Ausgestaltung der Erfindung ist der Querschnitt des Hohlkörpers zumindest an dem der Förderschnecke abgewandten Ende kleiner als der Querschnitt des rohrförmigen Siebs. Diese Querschnittsverengung führt zu einer zusätzlichen Verdichtung des entfeuchteten Abfalls.

Nach einer weiteren vorteilhaften Ausgestaltung der Erfindung ist zwischen dem rohrförmigen Sieb und dem Hohlkörper ein kegelförmiges oder kegelstumpfförmiges Übergangsstück angeordnet. Dieses dient zur Reduzierung des Querschnitts des rohrförmigen Siebs auf den Querschnitt des Hohlkörpers. Das Übergangsstück wirkt dabei wie ein Trichter. Es sorgt dafür, dass der entfeuchtete Abfall kontinuierlich in den Hohlkörper gefördert wird, ohne sich an einer Kante sammeln zu können.

Nach einer weiteren vorteilhaften Ausgestaltung der Erfindung ist der Hohlkörper als Konus ausgebildet, dessen Querschnitt an dem der Förderschnecke zugewandten Ende größer ist als an der Auswurföffnung. In diesem Fall ist kein Übergangsstück notwendig, da der Hohlkörper selbst wie ein Trichter wirkt.

Nach einer weiteren vorteilhaften Ausgestaltung der Erfindung sind die Förderschnecke und das rohrförmige Sieb horizontal ausgerichtet. Der Hohlkörper ist dabei nach unten gekrümmt. Die Auswurföffnung weist nach unten. Augrund der Gewichtskraft fällt der entfeuchtete und verdichtete Abfall von alleine nach unten. Unterhalb der Auswurföffnung kann ein Sammelbehälter angeordnet sein, in den der Abfall fällt. Die Krümmung oder Biegung des Hohlkörpers beträgt besonders bevorzugt zwischen 30 und 90° gegen die Horizontale.

Nach einer weiteren vorteilhaften Ausgestaltung der Erfindung ist das rohrförmige Sieb horizontal angeordnet und weist ausschließlich an der nach unten weisenden Seite Öffnungen auf. Die nach oben weisenden Seite des Siebs ist geschlossen. Auf diese Weise wird verhindert, dass Teile des Abfalls an der nach oben weisenden Seite aus dem Sieb gedrückt werden, sich auf der nach oben weisenden Außenseite des Siebs sammeln können um dann in größeren Verbünden nach unten zu fallen und die Flüssigkeitsauffangeinrichtung zu verunreinigen oder deren Abflüsse zu verstopfen. Bei den Öffnungen in dem rohrförmigen Sieb kann es sich beispielsweise um runde oder längliche Öffnungen handeln. Von der Größe und der Anzahl der Öffnungen hängt ab, wieviel Flüssigkeit in einer vorgegebenen Zeit aus dem Rohr austreten kann.

Nach einer weiteren vorteilhaften Ausgestaltung der Erfindung ist das rohrförmige Sieb an seiner nach oben weisenden, geschlossenen Seite mit einer Entflüftungsöffnung zur Entlüftung des rohrförmigen Siebs ausgestattet ist. Diese Entlüftungsöffnung kann über ein Entlüftungsrohr oder einen Entlüftungsschlauch mit der Aufnahme für den Abfall oder einem anderen Element der Vorrichtung verbunden sein.

Nach einer weiteren vorteilhaften Ausgestaltung der Erfindung ist an dem Hohlkörper für den entfeuchteten Abfall eine Einstelleinrichtung zum Verändern und Einstellen des Öffnungsquerschnitts der Auswurföffnung vorgesehen. Diese ist besonders bevorzugt an der Auswurföffnung angeordnet. Durch die Einstellung des Öffnungsquerschnitts der Auswurföffnung wird der Widerstand vorgegeben, der der Förderschnecke beim Transport und Verdichten des Abfalls entgegenwirkt. Je größer der Widerstand ist, um so mehr Feuchtigkeit wird aus dem Abfall während des Transports durch die Förderschnecke herausgepresst. Der Benutzer kann den Öffnungsquerschnitt an der Einstelleinrichtung manuell einstellen oder durch eine Steuereinrichtung vorgeben.

Nach einer vorteilhaften Ausgestaltung der Erfindung ist als Einstelleinrichtung an der Auswurföffnung eine bewegliche Klappe vorgesehen. Die Klappe ist über ein Gelenk oder ein Scharnier im Bereich der Auswurföffnung an dem Rohr angelenkt. Der durch die Förderschnecke aus der Auswurföffnung herausgedrückte entfeuchtete Abfall übt eine Kraft auf die bewegliche Klappe aus und drückt diese nach außen. Die Klappe wird daher um so weiter geöffnet, je größer die Kraft ist, die über die Förderschnecke und den Abfall auf die Klappe einwirkt. Diese Kraft wird durch die Konsistenz des entfeuchteten Abfalls beeinflusst. Je fester der entfeuchtete Abfall ist um so größer ist auch die Kraft, die auf die Klappe einwirkt.

Nach einer weiteren vorteilhaften Ausgestaltung der Erfindung ist als Einstelleinrichtung an der Auswurfeinrichtung ein starres Gehäuse, ein aus einem elastischem Material bestehender Schlauch in dem Gehäuse und eine steuerbare Zuführung für Druckluft in den Zwischenraum zwischen dem Gehäuse und dem Schlauch vorgesehen. Der Zwischenraum zwischen dem Gehäuse und dem Schlauch ist abgedichtet, so dass die Druckluft den Zwischenraum nicht unkontrolliert verlassen kann. Durch das Einströmen von Druckluft in den Zwischenraum wird der Schlauch zusammengedrückt, so dass sich sein Querschnitt verkleinert. Dies führt dazu, dass eine geringe Menge an entfeuchtetem Abfall, welcher durch die Förderschnecke zugeführt wird, den Schlauch passieren kann. Sobald die Druckluft aus dem Zwischenraum zwischen dem Gehäuse und dem Schlauch entweicht, kann sich der Schlauch wieder weiten und sein Durchmesser vergrößern. In diesem Fall kann eine größere Menge an entfeuchtetem Abfall den Schlauch passieren. Die Auswurföffnung befindet sich in diesem Fall an dem der Förderschnecke abgewandten Ende des Schlauchs.

Nach einer weiteren vorteilhaften Ausgestaltung der Erfindung ist an dem rohrförmigen Sieb eine Ausnehmung vorgesehen. In dem Bereich der Ausnehmung ist eine durch die Förderschnecke zur Rotation angetriebene, sternförmige oder kleeblattförmige Scheibe angeordnet, welche an dem rohrförmigen Sieb drehbar gelagert ist. Die Scheibe weist radial nach außen ragende Zungen auf, die bei einer sternförmigen Scheibe nach außen spitz zulaufen und bei einer kleeblattförmigen Scheibe an der Außenseite abgerundet sind. Die Anzahl und die Form der Zungen wird durch die Form der Förderschnecke bestimmt, da die Scheibe mit ihren Zungen in die Förderschnecke eingreift und durch die Wechselwirkung mit der Förderschnecke zur Rotation angetrieben wird. Die Scheibe sorgt dafür, dass

Nach einer weiteren vorteilhaften Ausgestaltung der Erfindung ist an der Aufnahme zum Zuführen des Abfalls eine Schutzeinrichtung vorgesehen um das Eingreifen mit der Hand oder das Eindringen größerer Gegenstände in die Förderschnecke zu verhindern.

Nach einer weiteren vorteilhaften Ausgestaltung der Erfindung ist zumindest an einem Abschnitt der Außenseite des rohrförmigen Siebs ein Abstreifer vorgesehen. Dieser ist besonders bevorzugt an dem der Auswurföffnung zugewandten Bereich des rohrförmigen Siebs angeordnet.

Nach einer weiteren vorteilhaften Ausgestaltung der Erfindung ist als Flüssigkeitsauffangeinrichtung ein Schmutzwassertank oder eine Schmutzwasserrinne vorgesehen.

Nach einer weiteren vorteilhaften Ausgestaltung der Erfindung ist die Vorrichtung mit einer automatischen Reinigungseinrichtung ausgestattet.

Nach einer weiteren vorteilhaften Ausgestaltung der Erfindung ist an der Auswurföffnung ein Sensor zum Erfassen der Konsistenz des austretenden Abfalls angeordnet. Die Flüssigkeitsauffangeinrichtung ist mit einem Absperrorgan ausgestattet. Ferner ist eine mit dem Sensor, dem Absperrorgan und den Wasserzuläufen verbundene Steuereinrichtung zum automatischen Ablauf eines Reinigungsprogramms vorgesehen.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung sind Ausführungsbeispiele der Erfindung dargestellt. Diese sind im folgenden näher beschrieben. Es zeigen:
- Figur 1: erstes Ausführungsbeispiel einer Vorrichtung zur Entwässerung von Abfällen in einer Seitenansicht,
- Figur 2: Vorrichtung gemäß Figur 1 in einer Ansicht von oben,
- Figur 3: rohrförmiges Sieb, Übergangsstück und Hohlkörper der Vorrichtung gemäß Figur 1,
- Figur 4: zweites Ausführungsbeispiel einer Vorrichtung zur Entwässerung von Abfällen,
- Figur 5: drittes Ausführungsbeispiel einer Vorrichtung zur Entwässerung von Abfällen,
- Figur 6: viertes Ausführungsbeispiel einer Vorrichtung zur Entwässerung von Abfällen,
- Figur 7: fünftes Ausführungsbeispiel einer Vorrichtung zur Entwässerung von Abfällen,
- Figur 8: sechstes Ausführungsbeispiel einer Vorrichtung zur Entwässerung von Abfällen,
- Figur 9: Einstelleinrichtung zum Einstellen des Öffnungsquerschnitts der Auswurföffnung mit einem starren Gehäuse und einem elastischen Schlauch, Detail zu Figur 7,
- Figur 10: Einstelleinrichtung zum Einstellen des Öffnungsquerschnitts der Auswurföffnung mit einer beweglichen Klappe, Detail zu Figur 8,
- Figur 11: externer Behälter zur Aufnahme des Schlamms,
- Figur 12: Behälter zu Aufnahme von Abwasser aus der Geschirrspülmaschine.

### Beschreibung der Ausführungsbeispiele

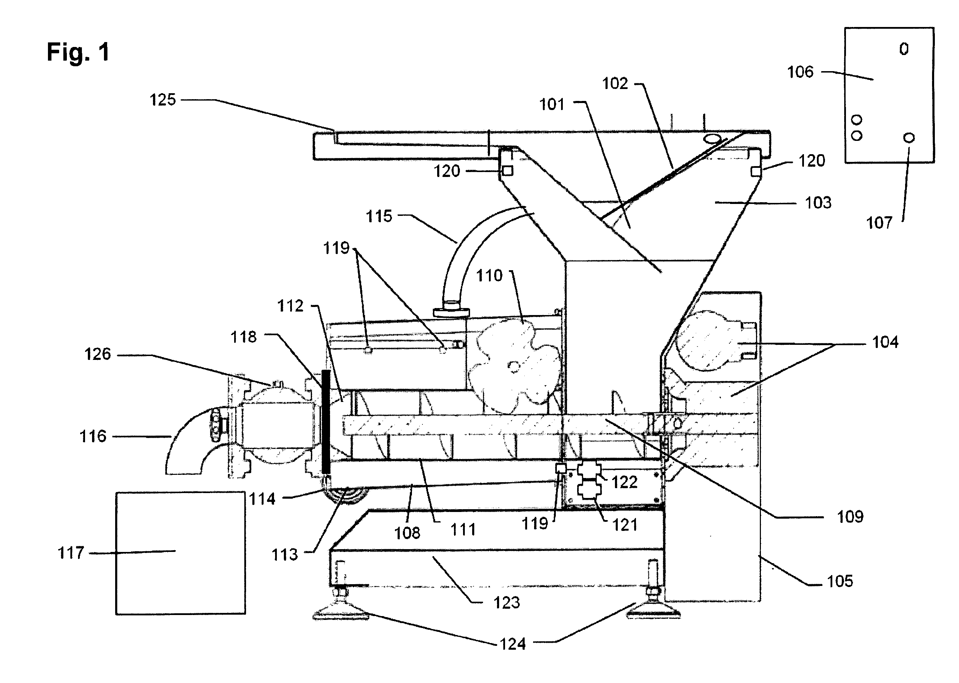

In Figur 1 ist ein erstes Ausführungsbeispiel einer Vorrichtung zur Entwässerung von Abfällen und zur Beseitigung sonstiger flüssiger Anteile aus Abfällen in einer Seitenansicht dargestellt. Die Abfälle werden über eine Aufnahme 101 in die Vorrichtung eingefüllt. Ein ausziehbarer Einwurfschutz 102 verhindert, dass Besteck, Teile des Geschirrs oder sonstige größere Gegenstände in die Vorrichtung gelangen können. Über einen Einfüllschacht 103 gelangt der Abfall in den Bereich einer Förderschnecke 109. Diese wird durch einen Motor 104 in Rotation versetzt. Der Motor ist durch ein Gehäuse 105 nach außen abgedeckt. Die Schalttafel 106 mit der Sprühdüsenautomatik 107 dient dem Ein- und Ausschalten der Vorrichtung sowie dem Wählen des gewünschten Betriebsmodus. Die Förderschnecke 109 ist von einem rohrförmigen Sieb 111 umgeben. Das rohrförmige Sieb 111 weist eine Ausnehmung auf, welche in der Zeichnung nicht dargestellt ist. Durch diese Ausnehmung auf der Oberseite ragt eine kleeblattförmige Scheibe in den Bereich der Förderschnecke. An das rohrförmige Sieb 111 schließt sich in Transportrichtung das Übergangsstück 112 an, welches an seiner Innenseite die Form eines Trichters beziehungsweise eines Kegelstumpfes aufweist. Das Übergangsstück 112 dient dazu, den Querschnitt des rohrförmigen Siebes 111 auf einen kleineren Querschnitt zu reduzieren. Es trägt damit zur Verdichtung des anhand der Förderschnecke entfeuchteten Abfalls bei.

An dem das rohrförmige Sieb und die Förderschnecke umgebenden Gehäuse 108 ist eine Ablaufrinne 113 mit Auslaufanschluss angeordnet. Diese ist mit einem Abwasserabschlussstutzen 114 ausgestattet. Ein Entlüftungsrohr beziehungsweise Entlüftungsschlauch 115 dient dazu, die Vorrichtung zu entlüften.

An das Übergangsstück 112 schließt sich eine Einrichtung 126 zur Einstellung des Querschnittes in Transportrichtung der Förderschnecke an. An der der Förderschnecke abgewandten Seite der Einrichtung 126 ist ein rohrförmiger Hohlkörper 116 angeordnet, der nach unten gekrümmt ist. Durch diesen rohrförmigen Hohlkörper fällt der entfeuchtete und verdichtete Abfall in den Sammelbehälter 117.

Oberhalb des rohrförmigen Siebes 111 sind Sprühdüsen 119 angeordnet, um das Sieb 111 an der Außenseite kontinuierlich zu reinigen. Die Reinigungswirkung erstreckt sich außerdem auf die Ablaufrinne 113. Darüber hinaus sind an der Aufnahme 101 mehrere Spül- und Reinigungsdüsen 120 angeordnet. Um die Düsen 119 und 120 mit Wasser zu versorgen, sind unterhalb des rohrförmigen Siebs 111 ein Kaltwasseranschluss 121 und ein Warmwasseranschluss 122 angeordnet.

Die Vorrichtung ist mit einem nicht in der Zeichnung vollständig dargestellten Gehäuse 123 ausgestattet. Es ruht auf mehreren Füßen 124, die höhenverstellbar ausgeführt sind. Eine Ablagefläche 125 an der Aufnahme 101 kann hinsichtlich ihrer Neigung eingestellt werden.

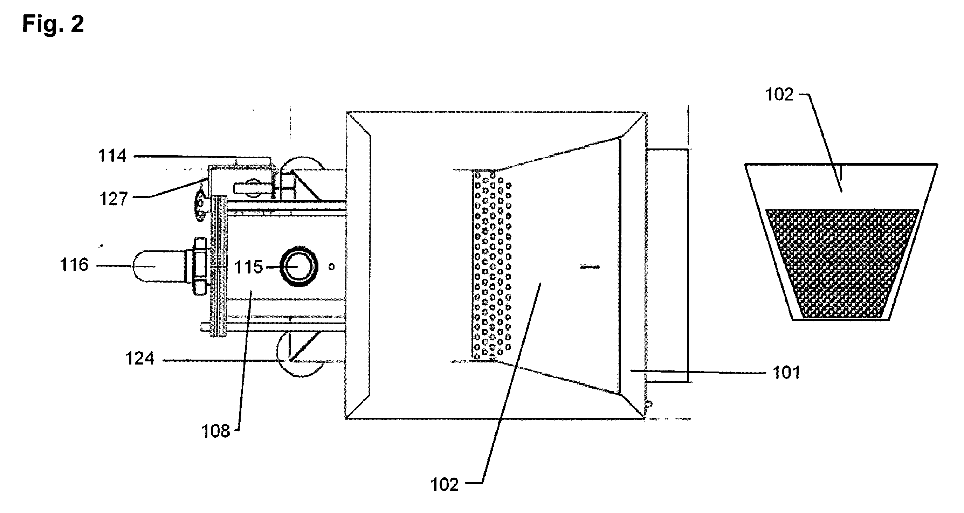

In Figur 2 ist die Vorrichtung gemäß Figur 1 in einer Ansicht von oben dargestellt.

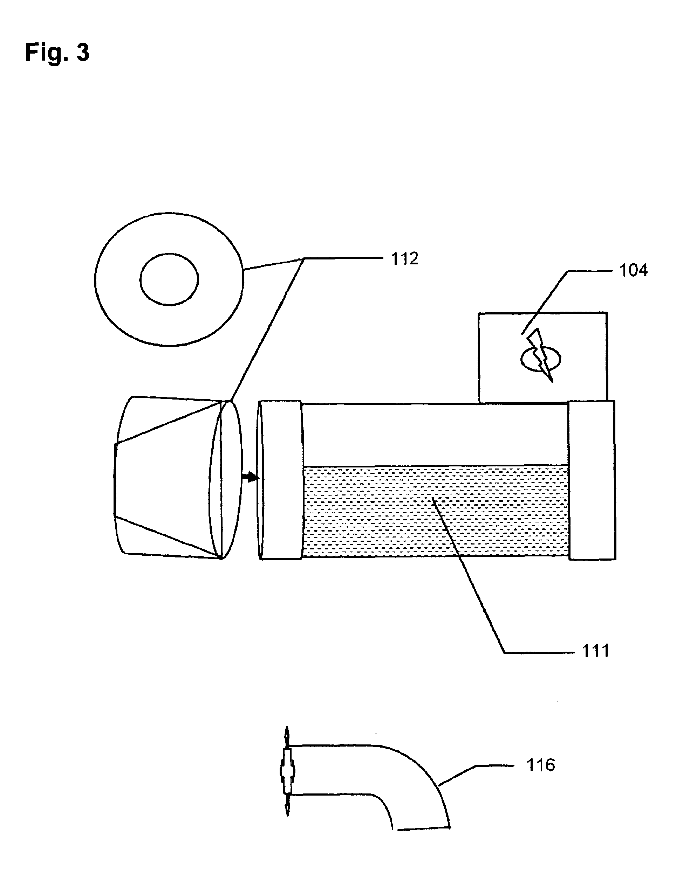

Figur 3 zeigt das rohrförmige Sieb 111, das Übergangsstück 112 und den rohrförmigen Hohlkörper 116 in zerlegtem Zustand. In der Darstellung sind die an der nach unten weisenden Seite des rohrförmigen Siebes 111 angeordneten Öffnungen erkennbar.

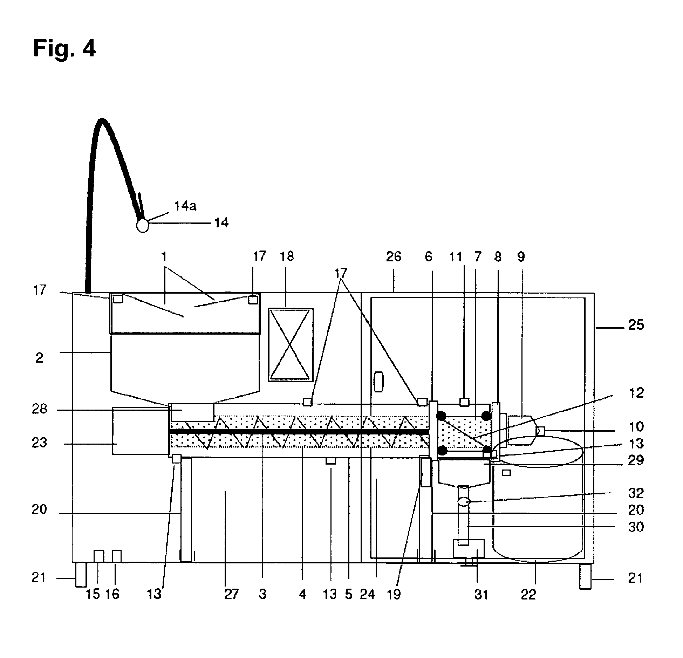

In Figur 4 ist ein zweites Ausführungsbeispiel einer Vorrichtung zur Entwässerung dargestellt. Es handelt sich um eine kompakte Anlage mit kleinster Abmessung. Die Anlage kann beliebig erweitert werden. Die Höhe kann auf die jeweilige Arbeitsweise erhöht werden. Die Vorrichtung wird entweder über die Steuertafel 18 oder über die Handbrause 14a eingeschaltet. Die Vorrichtung läuft nach dem Abschalten ca. 5 Minuten weiter. Das Bestücken der Anlage kann in verschiedener Weise erfolgen. Die Speisereste werden mittels Handbrause 14 vom Teller oder anderen Gefäßen über den Einwurfschutz 1 in den Einfüllschacht 2 abgespült. Um Verletzungen durch Eingreifen in die als Einfüllschacht 2 ausgebildete Aufnahme zum Zuführen von Abfall zu vermeiden ist eine Schutzeinrichtung 1 angebracht. Diese kann zum Reinigen abgenommen werden. Beim Abnehmen der Schutzreinrichtung wird die Vorrichtung automatisch abgeschaltet.

Die Küchen- und Speiseabfälle gelangen durch die Schutzreinrichtung 1 in den Einfüllschacht 2. Der Abfall fällt über die Öffnung 28 in das Rohr. Dort wird er von der Förderschnecke 3 erfasst. Die Förderschnecke 3 wird durch den Getriebemotor 23 angetrieben. Der Abfall wird durch die Förderschnecke in dem Rohr transportiert.

Die aus dem Rundsieb 4 austretende Flüssigkeit wird über die Ablaufrinne 5 in das Ablaufrohr 30 über den Öl- und Fettabscheider in die Kanalisation geleitet.

Damit eine Verdichtung erfolgen kann, endet die Förderschnecke 3 vor dem Flansch 6. Der noch verbliebene Abfall wird in dem Rundsieb 7 verdichtet. Damit weiche Abfälle nicht ungehindert aus der Auswurföffnung 10 austreten, ist eine Einstelleinrichtung 9 vorgesehen. Der aus dem Abfall austretende flüssige Anteil gelangt in die Ablaufrinne 5 und fließt über den Öl- und Fettabscheider in die Kanalisation.

Der aus dem Rundsieb 7 herausgedrückte Schlammanteil wird mit dem Schlammabstreifer 12 abgestreift. Die Sprühdüse 11 spült den Schlamm vom Rundsieb ab. Mit der Spüldüse 13 wird der Schlamm verflüssigt und fließt über die Ablaufrinne 5 zusammen mit dem Abwasser in den Schlammablaufschacht 29. Schlamm und Abwasser fließen in das Ablaufrohr 30 und von dort über den Öl- und Fettabscheider in die Kanalisation.

Die Konsistenz des Schlamms wird über die unterschiedliche Lochgröße des Rundsiebs 7 erreicht.

Der verdichtete und entwässerte Abfall wird über den Formkopf 9 durch den Auswurfkopf 10 gedrückt und fällt in den Auffangbehälter für Feststoffe 22. Zur Verdichtung des entfeuchteten Abfalls ist die Vorrichtung gemäß Figur 4 ebenfalls mit einem gekrümmten Hohlkörper entsprechend dem Hohlkörper 116 in Figur 1 ausgestattet. Dieser ist jedoch in Figur 4 nicht dargestellt.

Der Verdichtungsgrad des Abfalls wird über die unterschiedliche Öffnungsgröße des Formkopfes 9 und über den nicht dargestellten, sich an den Formkopf anschließenden Hohlkörper erreicht.

Sollte z. B. ein Knochen über die Schnecke 3 zum Auswurfkopf 10 geführt werden erweitert dieser sich und verengt sich wieder, wenn dieser herausgedrückt ist.

Zwischen Flansch 6 und 8 ist im unteren Bereich der Ablaufrinne 5 ein Schlammablaufschacht 29 eingebaut. Größe des Schlammschachts 29 wird nach Tagesmenge Küchen- und Speiseabfälle berechnet.

Der aus dem Rundsieb 7 rausgedrückte Schlammanteil wird mit dem Schlammabstreifer 12 abgestreift.

Die Sprühdüse 11 spült den Schlamm vom Rundsieb ab, mit der Spüldüse 13 wird der Schlamm verflüssigt und fließt über die Ablaufrinne 5 zusammen mit dem Abwasser in den Schlammablaufschacht 29.

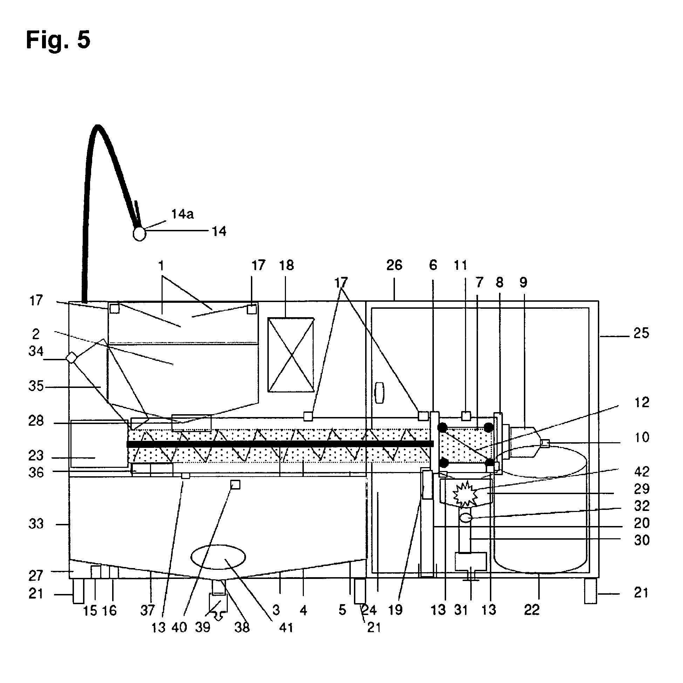

In Figur 5 ist ein drittes Ausführungsbeispiel einer Vorrichtung zur Entwässerung von Abfall dargestellt. Die Vorrichtung zeichnet sich dadurch aus, dass Abwasser einer anderen Vorrichtung, beispielsweise einer Spülmaschine zugeleitet wird, um den Abfall zu Verdünnen und um die Vorrichtung zu Reinigen. Zur Aufnahme des Abwassers einer anderen Anlage ist ein Abwassertank vorgesehen. Somit wird sehr viel Brauchwasser eingespart.

Mit der Mischeineinheit 42 wird Schlamm und Abwasser vermischt, bis dies so verflüssigt ist das es in das Ablaufrohr 30 und über den Öl- und Fettabscheider in die Kanalisation abgeleitet werden kann.

Eine Messeinheit steuert das Ventil 32. Dieses öffnet, wenn der Schlamm verflüssigt ist. Bei größeren Schlammengen wird der Schlamm und das Abwasser in den externen Behälter zur Aufnahme des Schlamms und Abwasser mit der Schlammpumpe 31 gepumpt und dort weiter verarbeitet.

Unter der Ablaufrinne 5 ist der Abwassertank 33 zur Aufnahme von Abwasser der Geschirrspülmaschine oder anderen Anlagen eingebaut. Das Abwasser wird über den Zulauf 34 durch den Einfüllschacht 35 in die Schnecke 3 eingeleitet. Das Abwasser läuft über das Rundsieb 37 in den Abwassertank 33. Grobe Schmutzpartikel werden mit der Schnecke zum Auswurfkopf 10 transportiert.

Das Abwasser aus dem Abwassertank 33 wird über die Düsen 13 zum Spülen der Ablaufrinne 5 und zur Verflüssigung des Schlamms im Schlammschacht 29 verwendet.

Zum Spülen der Ablaufrinne 5 und Verflüssigen des Schlamms wird das Abwasser im Abwassertank 33 über den Auslauf 38 mittels Öffnungsventil und Schmutzwasserpumpe 39 zu den Spüldüsen 13 und 11 geleitet. Die Reinigungsöffnung 41 wird zur Innenreinigung des Abwassertanks 33 geöffnet und anschließend wieder fest verschlossen.

Der Abwassertank 33 ist mit einem Überlauf 40 versehen. dieser ist direkt an das Abwassernetz des Betreibers angeschlossen. Sollte der Überlauf 40 verstopft sein, läuft das Abwasser über den Einlauf 36 in die Ablaufrinne 5, das Abflussrohr 30 und den Öl- und Fettabscheider in die Kanalisation.

Zur Verdichtung des entfeuchteten Abfalls ist die Vorrichtung gemäß Figur 5 ebenfalls mit einem gekrümmten Hohlkörper entsprechend dem Hohlkörper 116 in Figur 1 ausgestattet. Dieser ist jedoch in Figur 5 nicht dargestellt.

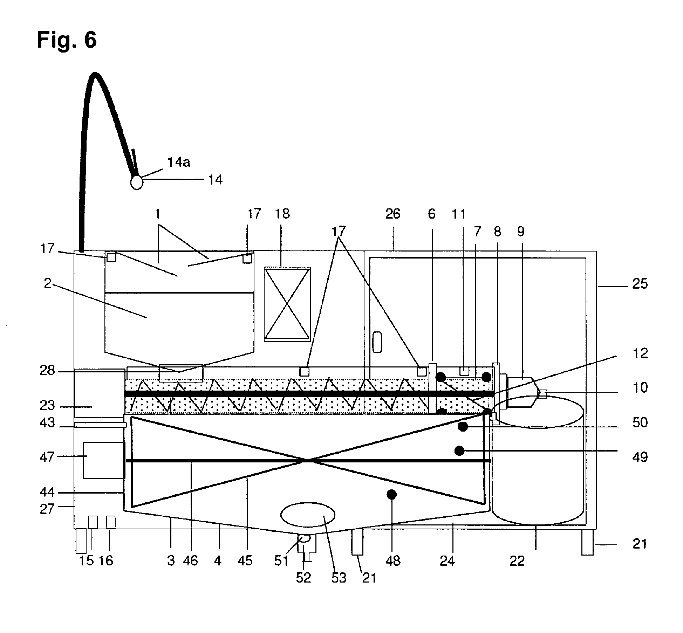

In Figur 6 ist ein viertes Ausführungsbeispiel einer Vorrichtung zur Entwässerung von Abfällen dargestellt. Diese Vorrichtung weist einen Behälter und ein Rührwerk zur Aufnahme des Abwassers von anderen Anlagen auf. Der Behälter mit Rührwerk kann extern aufgebaut oder in der Entwässerung- und Entschlammungs- Anlage eingebaut werden. Die Größe des Behälters wird nach dem Tagesvolumen der Küchen- und Speiseabfälle ermittelt. In dem Behälter wird der Schlamm mit 2/3 Wasser/Abwasser verdünnt. Hierzu soll das Abwasser von der Geschirrspülmaschine oder anderes Abwasser verwendet werden. Das Entleeren des Behälters wird so gesteuert, dass das Abwasser nicht auf einmal abgelassen wird. Dies geschieht in der Zeit, in dem der Betrieb ruht. Sollte rund um die Uhr gearbeitet werden, ist eine entsprechende Anzahl von Behältern zur Aufnahme des Schlamms notwendig. Die Verdünnung des Schlamms kann je nach Vorschriften gesteuert werden. Unter dem Rundsieb ist der Behälter 44 mit Rührwerk 45 eingebaut. Das Rührwerk wird mit dem Motor 47 über die Antriebswelle 46 angetrieben. In den Behälter 44 wird das Abwasser von einer Geschirrspülmaschine oder anderer Anlage direkt über den Zulauf 43 eingeleitet. In den Behälter kann soviel Abwasser eingeleitet werden wie der Füllanzeiger 50 zulässt. Sobald der Füllstand 50 erreicht ist, öffnet das Ventil 51 und das Abwasser fließt ab, oder die Pumpe 52 pumpt das Abwasser ab. Das Ventil 51 schließt, oder die Pumpe 52 stellt ab, wenn der Abwasserfüllanzeiger 49 anspricht. Diese berechnete Abwassermenge wird benötigt, um Schlamm und Abwasser aus der Entwässerung- und Entschlammungs- Anlage mit dem Rührwerk 45 zu vermischen. Ist der festgelegte Verflüssigungsgrad erreicht -gemessen über die Verflüsssigungsmessung 48-, wird das Schmutzwasser durch Intervallschaltung über die zeitgesteuerte Pumpe 52 oder das Ventil 51 zum Öl- und Fettabscheider in die Kanalisation geleitet. Damit soll verhindert werden, dass eine zu große Abwassermenge auf einmal über den Öl- und Fettabscheider in die Kanalisation gelangt. Die Reinigungsöffnung 53 wird zur Innenreinigung des Behälters für Schmutzwasser 44 geöffnet. Nach oder während der Reinigung wird das Ventil 51 geöffnet oder die Pumpe 52 wird eingeschaltet. Das Abwasser wird über den Öl- und Fettabscheider in die Kanalisation eingeleitet. Danach wird die Reinigungsöffnung 53 wieder fest verschlossen.

Zur Verdichtung des entfeuchteten Abfalls ist die Vorrichtung gemäß Figur 6 ebenfalls mit einem gekrümmten Hohlkörper entsprechend dem Hohlkörper 116 in Figur 1 ausgestattet. Dieser ist jedoch in Figur 6 nicht dargestellt.

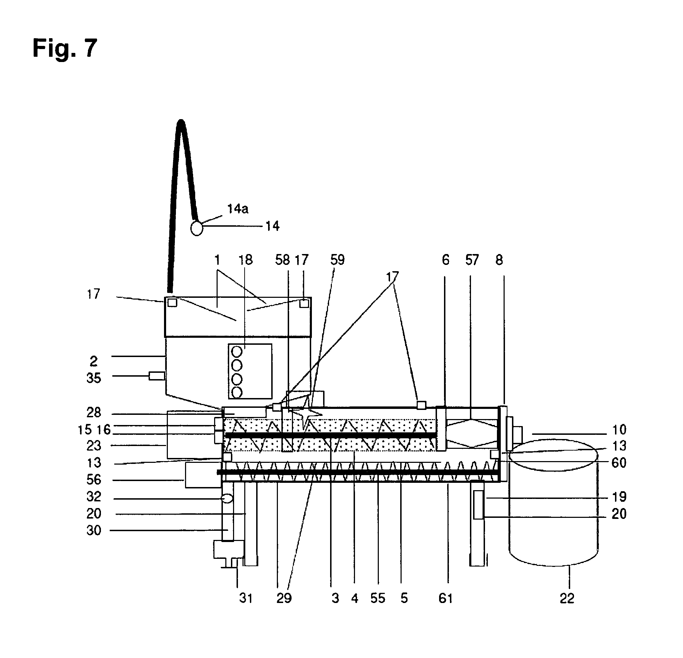

In Figur 7 ist ein fünftes Ausführungsbeispiel einer Vorrichtung zur Entwässerung von Abfällen dargestellt. Diese Vorrichtung ist mit einer Quetscheinrichtung und einer zusätzlichen Schnecke ausgestattet. Es handelt sich um eine kompakte Anlage mit kleinster Abmessung Die Anlage kann beliebig erweitert werden. Die Höhe kann auf die jeweilige Arbeitsweise erhöht werden. Die Quetscheinrichtung soll verhindern, dass weiches Material zwischen dem festen Material hindurch gedrückt wird. Die zusätzliche schnell laufende Schnecke soll den Schlamm mit dem Schmutzwasser aus anderen Anlagen vermischen. Der Abstreifer verhindert, dass sich das zu transportierede Material im oberen Bereich festsetzt.

Zur Verdichtung des entfeuchteten Abfalls ist die Vorrichtung gemäß Figur 7 ebenfalls mit einem gekrümmten Hohlkörper entsprechend dem Hohlkörper 116 in Figur 1 ausgestattet. Dieser ist jedoch in Figur 7 nicht dargestellt.

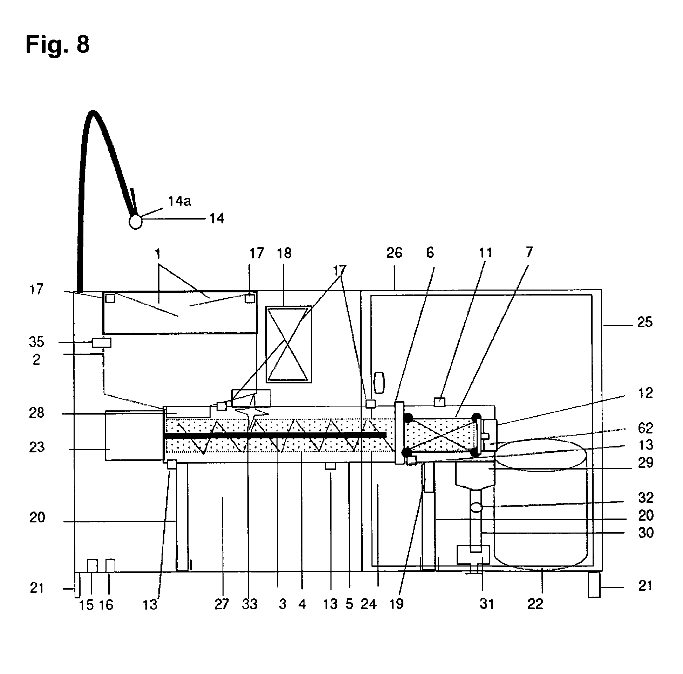

In Figur 8 ist ein weiteres Ausführungsbeispiel einer Vorrichtung zur Entwässerung von Abfällen dargestellt. Sie ist mit einer Klappe und einem Abweiser in Form einer sternförmigen drehbaren Scheibe ausgestattet. Die Transportschnecke 3 endet vor dem Flansch 6 kann aber je nach Bedarf auch bis kurz vor die Klappe 57 geführt werden. Damit eine Verdichtung erfolgen kann, ist am Ende des Rundsiebs 7 eine über Druck gesteuert Klappe 62 eingebaut. Diese wird geschlossen und geöffnet, wenn eine Kraft durch den Abfall auf die Klappe einwirkt. Somit kann je nach Anforderungen die heraus zu pressende Konsistenz eingestellt werden. Der verdichtete und entwässerte Abfall (Feststoff) fällt in den Auffangbehälter für Feststoffe 22. Nach Flansch 58 ist eine Art Kleeblatt oder sternförmige Scheibe drehbar eingebaut. Diese soll verhindern, dass weiches Material wie z. B. Kartoffelbrei das Sieb verstopft. Der Abstreifer 60 soll verhindern, dass sich Schlamm in den Ecken festsetzen kann. Am Einfüllschacht ist ein Anschlussstutzen 35 für Abwasserzuleitung von anderen Anlagen angebracht. Somit wird weniger Brauchwasser zum Spülen der Anlage benötigt.

Zur Verdichtung des entfeuchteten Abfalls ist die Vorrichtung gemäß Figur 8 ebenfalls mit einem gekrümmten Hohlkörper entsprechend dem Hohlkörper 116 in Figur 1 ausgestattet. Dieser ist jedoch in Figur 4 nicht dargestellt.

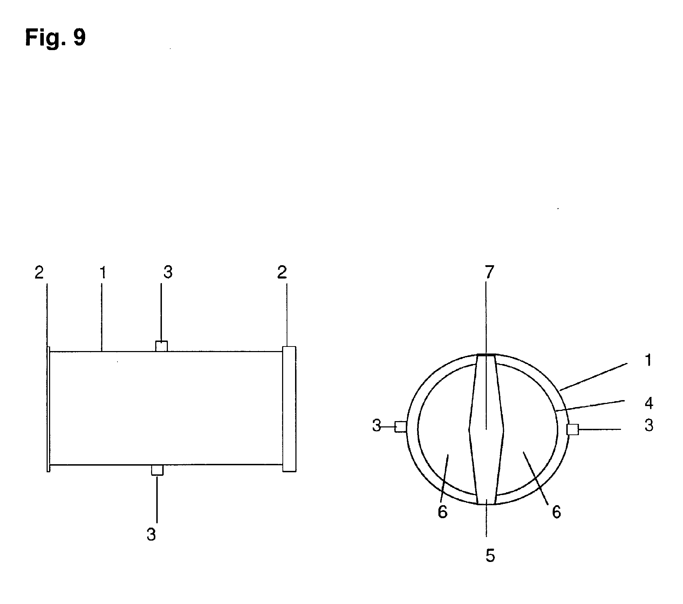

In Figur 9 ist eine Einstelleinrichtung zum Einstellen des Öffnungsquerschnitts der Auswurföffnung dargestellt. Sie betrifft ein Detail zu Figur 7. Die Einstelleinrichtung wird nach dem Rundsieb 4 in Figur 7 eingebaut . In dem Gehäuse 1 ist ein Gummischlauch oder eine Gummihülle 5 vorgesehen. Der Hohlraum zwischen dem Gehäuse 1 und der Gummihülle 5 kann mit Druckluft gefüllt werden. Damit eine Verdichtung erfolgen kann, ist die Gummihülle 5 geschlossen, erst wenn ein definierter Druck aufgebaut ist, öffnet sich die Hülle 5 und die Feststoffe werden durch den Zwischenraum 7 gedrückt. Ohne diese Einrichtung würden weiche Stoffe in der Mitte durchfließen.

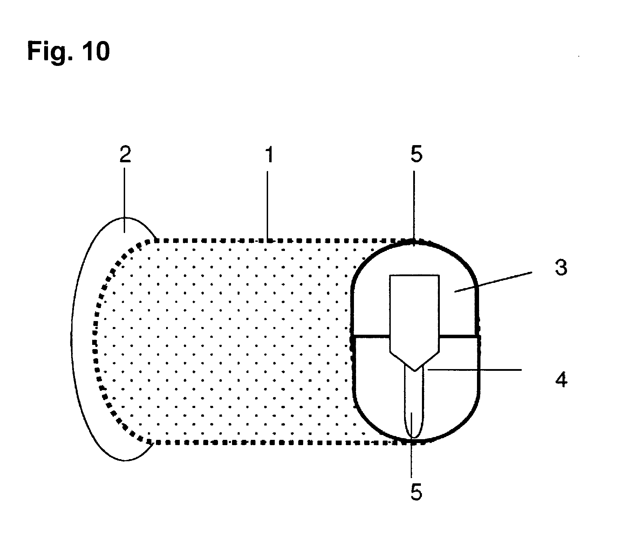

In Figur 10 ist eine Einstelleinrichtung zum Einstellen des Öffnungsquerschnitts der Auswurföffnung mit einer beweglichen Klappe dargestellt. Sie betrifft ein Detail zu Figur 8.

### Das Reinigen der Vorrichtung erfolgt wie folgt:

Das Reinigen der Anlage Figur 1, 4 u. 5 läuft durch das Bedienen der Schalttafel 18 automatisch ab. Das Ventil 32 schließt, die Reinigungsdüsen 17, 11 und 13 werden aktiviert, der Motor 23 schaltet die Schnecke 4 ein, der restliche Abfall wird nach 7 transportiert. Sobald am Formkopf 10 Flüssigkeit herauskommt, geht das Ventil 32 auf, das Spülwasser läuft in das Ablaufrohr 30 über den Öl- und Fettabscheider in die Kanalisation ab.

Das Reinigen der Anlage Figur 6 läuft durch das Bedienen der Schalttafel 18 automatisch ab. Die Reinigungsdüsen 17 und 11 werden aktiviert, der Motor 23 schaltet die Schnecke 4 ein. Der restliche Abfall wird nach 7 transportiert. Das Spülwasser läuft über den Behälter 44. Zur Endreinigung wird über die Reinigungsdüsen 17 und 11 warmes Wasser eingeleitet, es kann auch über eine Dosieranlage geeignetes Reinigungsmittel beigefügt werden. Das Spülwasser läuft in das Ablaufrohr 30 über den Öl- und Fettabscheider in die Kanalisation ab.

Zum Reinigen der Anlage Figur 7 wird der Auswurfkopf 10 abgenommen, um den Restabfall in dem Rundsieb 7 und Formkopf 9 zu entfernen. Die Anlage wird eingeschaltet 18. In den Einfüllschacht 2 wird Trockenmaterial gegeben. Dieses gelangt durch die Öffnung 28 in die Schnecke 4. Diese transportiert das Trockenmaterial zum Rundsieb 7 und drückt den restlichen Abfall durch den Formkopf 9. Der Abfall fällt in den Bio-Abfallbehälter 22. Sobald Trockenmaterial aus dem Formkopf 9 austritt, kann die Anlage abgeschaltet werden, das restliche Trockenmaterial verbleibt in der Anlage.

Manuelle Reinigung: Stromzufuhr und Wasser abstellen. Flansch 6 und 8 wird entfernt, Schnecke 3 und 55 wird herausgezogen. Flansch 58 wird entfernt Sieb wird abgenommen. Somit können alle Teile und der Innenraum gereinigt werden.

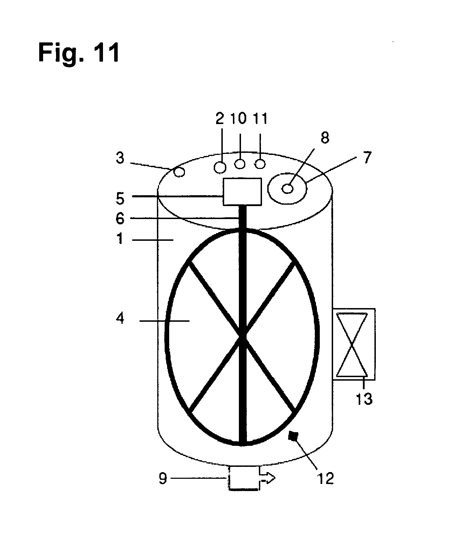

Figur 11 zeigt einen externen Behälter zur Aufnahme des Schlamms. Bei geringer Schlammmenge kann der Behälter auch in der Entwässerungs- und Entschlammungs- Anlage eingebaut werden. Die Größe des Behälters wird nach dem Tagesvolumen der Küchen- und Speiseabfälle ermittelt. In dem Behälter wird der Schlamm mit 2/3 Wasser verdünnt. Hierzu soll das Abwasser von der Geschirrspülmaschine oder anderes Abwasser verwendet werden. Das Entleeren des Behälters wird so gesteuert, dass das Abwasser nicht auf einmal abgelassen wird. Dies geschieht in der Zeit, in der der Betrieb ruht. Sollte rund um die Uhr gearbeitet werden, ist eine entsprechende Anzahl von Behältern zur Aufnahme des Schlamms notwendig. Die Verdünnung des Schlamms kann je nach Vorschriften gesteuert werden. Der von der Entwässerung- und Entschlammungs- Anlage abgepumpte Schlamm wird über den Einlaufstutzen 2 in den Behälter 1 eingeleitet. Um den Schlamm zur verflüssigen, wird das von der Geschirrspülmaschine abfließende Abwasser über den Anschluss 2 in den Behälter 1 eingeleitet. Sollte dieses Abwasser zur Verflüssigung nicht ausreichen, kann weiteres geeignetes Wasser über den Anschluss 3 hinzu geführt 11 werden. Das Rührwerk 4 wird mit einem Motor 5 über die Antriebswelle 6 angetrieben, das Rührwerk 4 mischt den Inhalt im Behälter 1 so auf, dass er flüssig wird. Eine Messeinrichtung 10 steuert den Flüssigkeitgrad. Der stark verflüssigte Schlamm wird durch Intervallschaltung innerhalb über die zeitgesteuerte Pumpe oder Ventil 9 zum Öl- und Fettabscheider in die Kanalisation geleitet. Damit soll verhindert werden, dass eine zu große Abwassermenge auf einmal über den Öl- und Fettabscheider in die Kanalisation gelangt.

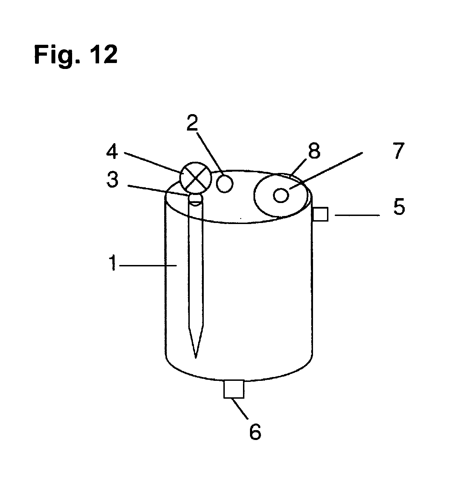

Figur 12 zeigt einen Behälter zur Aufnahme von Abwasser aus der Geschirrspülmaschine. Das Abwasser kann zum Spülen, Reinigen und Bewässern der Entwässerung- und Entschlammungs- Anlage und für die Verdünnung des Schlamms im Behälter zur Aufnahme des Schlamms verwendet werden. Der Behälter kann auch extern aufgestellt werden oder in die Entwässerung- Entschlammungs- Anlage eingebaut werden. Somit wird sehr viel Brauchwasser eingespart. Über den Einlauf 2 läuft -von groben Partikeln gereinigt- das Abwasser in den Behälter 1. Über den Entnahmeanschluss 3 und Förderpumpe 4 wird das Abwasser zur Entwässerung- und Entschlammungs- Anlage geleitet. Über den Überlauf 5 wird das Abwasser, welches vom Behälter 1 nicht aufgenommen werden kann, über den Öl- und Fettabscheider in die Kanalisation geleitet. Zum Reinigen kann der Deckel der Reinigungsöffnung 7 geöffnet 8 werden. Nach oder während der Reinigung kann der Ablauf 6 geöffnet werden, das Abwasser wird über den Öl- und Fettabscheider in die Kanalisation geleitet.

### Bezugszahlen

- 1: Einwurfschutz (Handschutz) abnehmbar, Anlage schaltet automatisch ab
- 2: Einfüllschacht Größe nach Bedarf
- 3: Schnecke langsam drehend (Drehzahl nach anfallenden Abfällen)
- 4: Rundsieb Entwässerung. Größe der Lochung nach Beschaffenheit der Abfälle
- 5: Ablaufrinne mit Auslaufanschluss
- 6: Flansch
- 7: Rundsieb Entschlammung Größe der Lochung nach Beschaffenheit der Abfälle
- 8: Flansch mit Aufnahmekopf für Formkopf
- 9: Formkopf verschiedene Öffnungsgrößen hierüber wird die Verdichtung gesteuert
- 10: Auswurfkopf mit Steuerung der Sprühdüse 11 schaltet ein wenn festes Material kommt
- 11: Sprühdüse zur Entschlammung des Rundsiebes
- 12: Schlammabstreifer
- 13: Spül- und Reinigungsdüse
- 14: Spülschlauch mit Sprühkopf
- 14a: Zubehör: Spülkopfautomatik schaltet die Anlage automatisch ein)
- 15: Kaltwasseranschluss
- 16: Warmwasseranschluss
- 17: Reinigungsdüse
- 18: Schalttafel
- 19: Höhe je nach Bedarf verstellbar
- 20: Standfuß
- 21: Montageschiene
- 22: Auffangbehälter für Feststoffe
- 23: Getriebemotor Stärke je nach stündlicher Leistung, läuft 5 Minuten nach
- 24: Tür kann nur bei abgeschalteter Anlage geöffnet werden
- 25: Seitenteil und Rückwand geschlossen
- 26: Ablagefläche Neigung zum Einwurfschacht
- 27: Frontteil abnehmbar
- 28: Öffnung zwischen Einfüllschacht und Schnecke
- 29: Schlammablaufschacht
- 30: Ablaufrohr
- 31: Schlammpumpe mit Anschlussmuffe
- 32: Ventil
- 33: Abwassertank
- 34: Zulauf
- 35: Einfüllschacht
- 36: Einlauf zum Abwasserbehälter
- 37: Rundsieb fein
- 38: Auslauf mit Anschlussmuffe
- 39: Schmutzwasserpumpe
- 40: Überlauf
- 41: Reinigungsöffnung
- 42: Mischeinheit
- 43: Zulauf Abwasser (Geschirrspüle u. a.)
- 44: Behälter für Schmutzwasser
- 45: Rührwerk
- 46: Antriebwelle
- 47: Getriebemotor
- 48: Verflüssigungsmessung
- 49: Abwasserfüllmenge Sollmenge
- 50: Füllstandanzeiger
- 51: Ventil
- 52: Pumpe
- 53: Reinigungsöffnung
- 54: Überlauf
- 55: Schnell laufende Schnecke
- 56: Motor
- 57: Quetscheinrichtung (Ballon)
- 58: Flansch
- 59: Sternförmige Scheibe
- 60: Abstreifer
- 61: Gehäuse
- 62: Klappe

- 101: Aufnahme für den Abfall
- 102: Einwurfschutz
- 103: Einfüllschacht
- 104: Motor
- 105: Gehäuse des Motors
- 106: Schalttafel
- 107: Sprühdüsenautomatik
- 108: Gehäuse
- 109: Förderschnecke
- 110: kleeblattförmige Scheibe
- 111: rohrförmiges Sieb
- 112: Übergansstück
- 113: Ablaufrinne mit Auslaufanschluss
- 114: Abwasserabschlussstutzen
- 115: Entlüftungsschlauch
- 116: rohrförmiger Hohlkörper
- 117: Sammelbehälter
- 118:
- 119: Sprühdüse
- 120: Spül- und Reinigungsdüse
- 121: Kaltwasseranschluss
- 122: Warmwasseranschluss
- 123: Gehäuse
- 124: höhenverstellbarer Fuß
- 125: Ablagefläche
- 126: Einrichtung zur Einstellung des Öffnungsquerschnitts

## Patentansprüche

1. Vorrichtung zur Entwässerung von Abfällen und Beseitigung sonstiger flüssiger Anteile aus Abfällen
mit einer Aufnahme (101) zum Zuführen des Abfalls,
mit einem rohrförmigen Sieb (111) zum Trennen des flüssigen vom festen Anteil des Abfalls,
mit einer drehbar gelagerten Förderschnecke (109) in dem rohrförmigen Sieb (111),
mit einem Antrieb (104) für die Förderschnecke (109),
mit einem an der in Transportrichtung der Förderschnecke (109) vorderen Stirnseite des rohrförmigen Siebs (111) mittelbar oder unmittelbar angeordneten Hohlkörper (116) zum Verdichten und Weiterleiten des durch die Förderschnecke (109) entfeuchteten Abfalls,
mit einer der Förderschnecke (109) zugewandten Öffnung des Hohlkörpers (116),
mit einer Auswurföffnung an dem dem rohrförmigen Sieb (111) abgewandten Ende des Hohlkörpers (116) für den entfeuchteten und verdichteten Abfall,
mit einer Krümmung des Hohlkörpers (116) zwischen der der Förderschnecke (109) zugewandten Öffnung und der Auswurföffnung.

2. Vorrichtung nach Anspruch 1, **dadurch gekennzeichnet, dass** der Querschnitt des Hohlkörpers (116) zumindest an dem der Förderschnecke (109) abgewandten Ende kleiner ist als der Querschnitt des rohrförmigen Siebs (111).

3. Vorrichtung nach Anspruch 2, **dadurch gekennzeichnet, dass** der Hohlkörper (116) als Rohr ausgebildet ist, und dass zwischen dem rohrförmigen Sieb (111) und dem Hohlkörper (116) ein kegelförmiges oder kegelstumpfförmiges Übergangsstück (112) angeordnet ist zur Reduzierung des Querschnitts des rohrförmigen Siebs (111) auf den Querschnitt des Hohlkörpers (116).

4. Vorrichtung nach Anspruch 2, **dadurch gekennzeichnet, dass** Hohlkörper als Konus ausgebildet ist, dessen Querschnitt an dem der Förderschnecke zugewandten Ende größer ist als an der Auswurföffnung.

5. Vorrichtung nach einem der vorhergehenden Ansprüche, **dadurch gekennzeichnet, dass** die Förderschnecke (109) und das rohrförmige Sieb (111) horizontal ausgerichtet sind, dass der Hohlkörper (116) nach unten gekrümmt ist, und dass die Auswurföffnung nach unten weist.

6. Vorrichtung nach einem der vorhergehenden Ansprüche, **dadurch gekennzeichnet, dass** das rohrförmige Sieb (111) horizontal angeordnet ist, und dass das rohrförmige Sieb (111) Öffnungen an der nach unten weisenden Seite aufweist und an der nach oben weisenden Seite geschlossen ist.

7. Vorrichtung nach Anspruch 6, **dadurch gekennzeichnet, dass** die nach unten weisende Hälfte des rohrförmigen Siebs (111) mit Öffnungen ausgestattet ist, und dass die nach oben weisenden Hälfte des rohrförmigen Siebs (111) geschlossen ist.

8. Vorrichtung nach Anspruch 6 oder 7, **dadurch gekennzeichnet, dass** das rohrförmige Sieb an seiner nach oben weisenden, geschlossenen Seite mit einer Entflüftungsöffnung zur Entlüftung des rohrförmigen Siebs (111) ausgestattet ist.

9. Vorrichtung nach Anspruch 8, **dadurch gekennzeichnet, dass** die Entlüftungsöffnung über ein Entlüftungsrohr oder einen Entlüftungsschlauch (115) mit der Aufnahme (101) zum Zuführen des Abfalls verbunden ist.

10. Vorrichtung nach einem der vorhergehenden Ansprüche, **dadurch gekennzeichnet, dass** der Hohlkörper (116) mit einer Einstelleinrichtung (126) zum Verändern und Einstellen des Querschnitts des Hohlkörpers ausgestattet ist.

11. Vorrichtung nach Anspruch 10, **dadurch gekennzeichnet, dass** als Einstelleinrichtung an der Auswurföffnung eine bewegliche Klappe oder ein starres Gehäuse, ein aus einem elastischen Material bestehender Schlauch in dem Gehäuse und eine steuerbare Zuführung für Druckluft in den Zwischenraum zwischen dem Gehäuse und dem Schlauch vorgesehen ist.

12. Vorrichtung nach einem der vorhergehenden Ansprüche, **dadurch gekennzeichnet, dass** an der Außenseite des rohrförmigen Siebs Wasserzuleitungen vorgesehen sind um das rohrförmige Sieb abzuspülen.

13. Vorrichtung nach einem der vorhergehenden Ansprüche, **dadurch gekennzeichnet, dass** an der Aufnahme zum Zuführen des Abfalls eine Wasserzuleitung vorgesehen ist, um Gegenstände, welche mit dem Abfall versehen sind, abzuspülen und/ oder um dem Abfall Wasser beizumischen.

14. Vorrichtung nach Anspruch 12 oder 13, **dadurch gekennzeichnet, dass** die Wasserzuleitungen mit der Wasserableitung einer mit Wasser betriebenen Vorrichtung verbunden sind.

15. Vorrichtung nach Anspruch 14, **dadurch gekennzeichnet, dass** die Wasserzuleitungen mit einer Geschirrspülmaschine verbunden sind.
